# EUROPEAN PATENT APPLICATION

(11) **EP 0 636 523 A1**
(43) Date of publication of application: **01.02.1995**
(21) Application number: 94110665.0
(22) Date of filing: 08.07.1994
(51) Int. Cl.: B60R 25/02

(54) **Steering lock device**

(30) Priority: 09.07.1993 JP 37683/93 U
(71) Applicant: KABUSHIKI KAISHA TOKAI RIKA DENKI SEISAKUSHO, Niwa-gun, Aichi (JP)
(72) Inventor: Kawachi, Tomonori, c/o Kabushiki Kaisha Tokai, Oaza Toyota, Oguchi-cho, Niwa-gun Aichi (JP)
(74) Representative: Grünecker, Kinkeldey, Stockmair & Schwanhäusser Anwaltssozietät

(57) **Abstract**

In a steering lock device, a key cylinder (9) is removed from a body (1) with the key rotor (8) of the key cylinder (9) turned to the "LOCK" position, a regulating tappet (17) is moved in the direction of the arrow A, so that a preventing member (21) is engaged with the engaging groove (14) of an engaging body (13). As a result of the engagement, the engaging body (13) and accordingly a cam shaft (2) are prevented from being turned. Even if, in this case, the regulating lever (17) is broken with the key cylinder (9) removed from the body (1), the turning of the cam shaft (2) is maintained inhibited by the preventing member (21), and therefore the turning of the cam shaft (2) is positively prevented.

## Description

### BACKGROUND OF THE INVENTION

### Field of the invention

This invention relates to a steering lock device which locks a steering shaft and accordingly a steering wheel with the key rotor of its key cylinder turned to the locking position.

### Related art

A steering lock device for a motor vehicle is generally designed as follows: When, after the key rotor of the key cylinder in its body is turned to the locking position (the "LOCK" position) with the key, the latter is removed from the key rotor, its lock bar engages with the steering shaft system, so that the steering shaft and the steering wheel are locked; that is, they are inhibited from being turned.

When the key rotor is turned to an operating position (any one of the "ACC", "ON" or "START" positions) with the key inserted in it, the lock bar is moved by the cam protrusion of a cam shaft which is turned together with the key rotor, so that the lock bar is disengaged from the steering shaft system. As a result, the steering shaft and accordingly the steering wheel are unlocked. When the cam shaft is turned, the ignition switch is operated.

As is apparent from the above description, with the steering lock device of this type, the steering wheel and the ignition switch cannot be operated without the key. Thus, the use of the steering lock device is effective in preventing the vehicle from being stolen.

However, the steering lock device suffers from the following difficulty: When, with the steering shaft locked, the key cylinder is removed from the body by some method, then the cam shaft is exposed in the body. If, under this condition, the cam shaft is turned to the operating position with a special tool, then it becomes possible to disengage the lock bar from the steering shaft system and to operate the ignition.

In order to overcome the above-described difficulty, a steering lock device is proposed under Unexamined Japanese Utility Model Application Hei. 4-134773.

The steering lock device thus proposed includes an engaging body having an engaging groove which is turned together with the cam shaft; a preventing member provided in the body in such a manner that it is movable between an engaging position and a releasing position; and a regulating member which engages with the preventing member when the latter has been moved to the engaging position.

When the steering lock device is in the normal state with the key cylinder accommodated in the body, the preventing member is held at the releasing position being pushed by the key cylinder. When, with the steering shaft locked, the key cylinder is removed from the body by some method, the preventing member is moved to the engaging position by the energizing force of an energizing means to engage with the engaging groove of the engaging body. As a result, the engaging body and accordingly the cam shaft are prevented from being turned. Hence, it becomes impossible to unlock the steering shaft and to operate the ignition switch. The regulating member inhibits the preventing member from moving from the engaging position to the releasing position. Therefore, it is impossible to move the preventing member to the releasing position even if tried to do so.

In the above-described steering lock device, the preventing member, pushed by the key cylinder, engages with the engaging groove of the engaging body to prevent the rotation of the cam shaft. Hence, if, with the key cylinder removed from the body, the preventing member is broken, then it becomes possible to turn the cam shaft.

### SUMMARY OF THE INVENTION

In view of the foregoing, an object of the invention is to provide a steering lock device which is so designed that, when the key cylinder is removed from the body, the cam shaft in the body is prevented from being turned; in which the turning of the cam shaft is more positively prevented, and its theft preventing function is enhanced.

The foregoing object of the invention has been achieved by the provision of a steering lock device which, according to the invention, comprises: a body mounted on a vehicle; a cam shaft having a cam protrusion on the cylindrical surface thereof, the cam shaft being rotatably provided in the body; a key cylinder having a key rotor which is turned with a key, the key cylinder being set in the body in such a manner that the key cylinder is turned together with the cam shaft; a locking member which is moved by the cam protrusion as the cam shaft turns, the locking member adapted to lock a steering shaft with the key rotor turned to a locking position; an engaging body having an engaging groove, the engaging body being turned together with the cam shaft; a regulating lever provided in the body in such a manner that the regulating lever is axially movable, the regulating lever being urged towards the key cylinder by energizing means so that, when the key cylinder is set in the body, the regulating lever, being depressed by the key cylinder, is moved to a regulating position, and when the key cylinder is removed from the body, the regulating lever is moved to a regulation releasing position; and a preventing member movably provided in the body, the preventing member being urged toward the engaging groove by energizing means so that, with the regulating member at the regulating position, the preventing member is held at an engagement releasing position where the engagement of the preventing member with the engaging groove is released, and with the cam shaft at a locking position, the preventing member is moved, as the regulating lever is moved to the regulation releasing position, to an engaging position where the preventing member is engaged with the engaging groove, to prevent the engaging body from turning.

If the key cylinder is removed from the body with the key rotor of the key cylinder turned to the locking position; that is, with the steering shaft locked, then the regulating lever being pushed by the key cylinder is moved from the regulating position to the regulation releasing position, and accordingly the preventing member is moved from the engagement releasing position to the engaging position to engage with the engaging groove of the engaging body. As a result of this engagement, the engaging body and accordingly the cam shaft are prevented from being turned, so that the steering shaft cannot be unlocked.

Even if, in this case, the regulating lever is broken with the key cylinder removed, the rotation of the cam shaft is maintained inhibited by the preventing member; that is, the cam shaft is more positively prevented from turning. Thus, the use of the steering lock device of the invention is considerably effective in preventing car theft.

### BRIEF DESCRIPTION OF THE DRAWINGS

FIG. 1 is a longitudinal sectional view showing a steering lock device, which constitutes one embodiment of this invention;
FIG. 2 is a sectional view taken along line X-X in FIG. 1;
FIG. 3 is a longitudinal section view, corresponding to FIG. 1, showing the steering lock device in the body of which a key cylinder is to be built;
FIG. 4 is a sectional view, corresponding to FIG. 2, showing the steering lock device in the same state as in FIG. 3;
FIG. 5 is a longitudinal sectional view showing essential components of the steering lock device from which the key cylinder has been removed;
FIG. 6 is a sectional view, corresponding to FIG. 2, of the steering lock device in the same state as in FIG. 5.

### DETAILED DESCRIPTION OF THE PREFERRED EMBODIMENTS

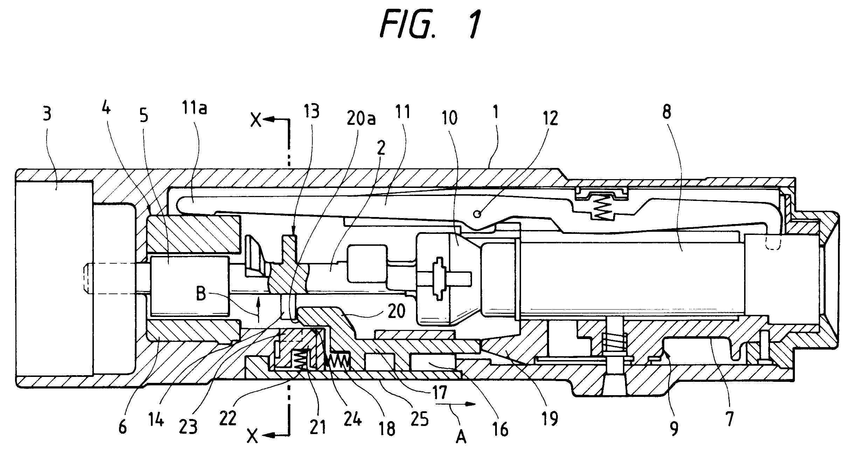

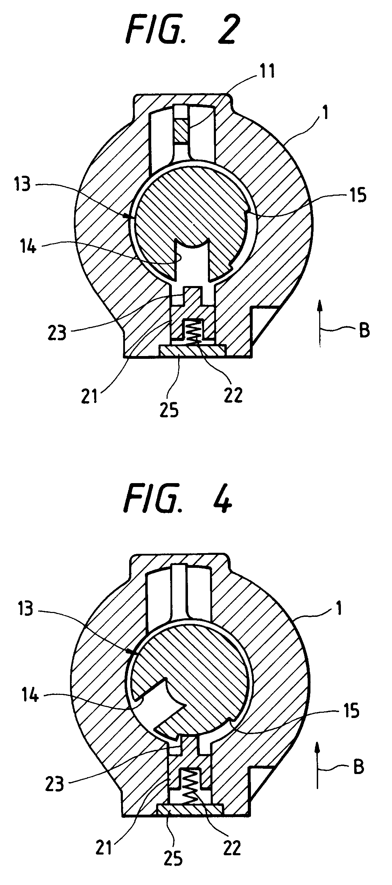

A steering lock device, which constitutes one embodiment of this invention, will be described with reference to the accompanying drawings. In FIGS. 1 and 2 showing the steering lock device which has been assembled, reference numeral 1 designates a hollow body which is mounted near the steering shaft of a vehicle (not shown).

A cam shaft 2 is rotatably provided in the deep of the hollow body 1. An ignition switch 3 is provided at the rear end (the left end in FIG. 1) of the cam shaft 2 so that it is operated by the rotation of the cam shaft 2.

A cam protrusion 5 is formed on the rear end portion of the cam shaft 2, to move a locking member 4 through the rotation of the cam shaft 2. The locking member 4 is a conventional one which comprises: a frame 6 which surrounds the cam protrusion 5 so as to be moved by the latter 5; and a locking bar (not shown) having its one end portion coupled to the frame 6. A spring (not shown) is provided to urge the other end portion of the locking bar to engage with the collar of the steering shaft.

A key cylinder 9 is fixedly provided in the other end Portion (the open end portion) of the body 1 in such a manner that it is prevented from coming off the body 1. The key cylinder 9 has a key rotor 8 in a cylinder casing 7 which is operated with a key (not shown). The key cylinder 9 is so designed that, only when the key rotor 8 is turned to the locking position ("LOCK" position), the key is allowed to be inserted into the key hole of the key rotor 8 or to be removed from it. With the key cylinder 9 held inside the body 1, the rear end portion of the key rotor 8 is engaged with a coupling portion 10 forming the front end portion of the cam shaft 2, so that the key rotor 8 and the cam shaft 2 are rotated as one unit.

A rocking lever 11 is provided over the cylinder casing 7 in such a manner that it is swingable about a pin 12. The rocking lever 11 is designed as follows: As is well known in the art, when the key rotor 8 is turned to any operating position, the "ACC", "ON" or "START" position, the rear end portion 11a of the rocking lever 11 is engaged with the above-described frame 6 to hold the locking member 4 at the engagement releasing position; and when the key rotor 8 is turned to the "LOCK" position, it is disengaged from the frame 6.

An engaging body 13 is extended from the middle of the cam shaft 2. The engaging body 13, as shown in FIG. 2, has an engaging groove 14 which is open radially outwardly of the cam shaft 2 and at both ends as viewed in the axial direction; and an auxiliary engaging groove 15 which is shallower and wider than the engaging grooved 14.

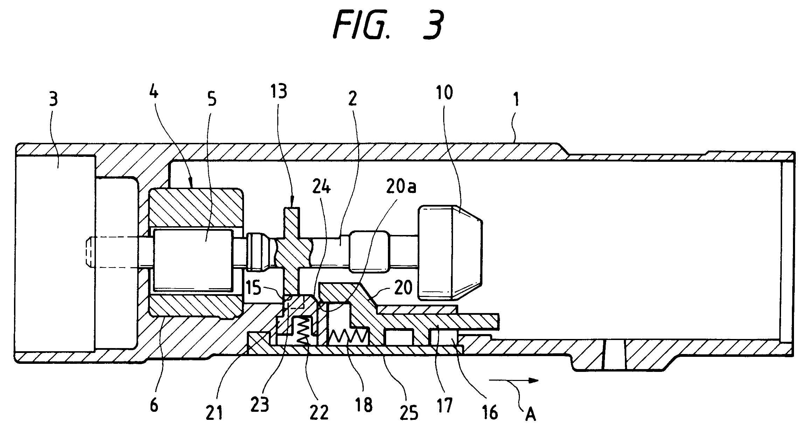

The body 1 has a guide 16 at a predetermined position, and a regulating lever 17, being guided by the guide 16, is movable axially of the cam shaft 2. The regulating lever 17 is urged by an energizing means, namely, a spring 18 towards the key cylinder 9 (in the direction of the arrow A in FIG. 1). Therefore, before the key cylinder 9 is set in the body 1, the regulating lever 17 is moved to a regulation releasing position as shown in FIG. 3. When the key cylinder 9 has been set in the body 1, the regulating lever 17 is pushed by a protrusion 19 formed on the rear end of the cylinder casing 7, so that it is moved to a regulating position as shown in FIG. 1 and held there. The rear end portion of the regulating lever 17 has a cam 20 with a sloped surface 20a.

A preventing member 21 is provided inside the body 1 in such a manner as to confront with the above-described engaging body 13. The preventing member 21 is urged by an energizing means, namely, a spring 21 towards the engaging body 13 (in the direction of the arrow B in FIG. 2). The preventing member 21 has an engaging protrusion 23 extended towards the engaging body 13, and a sloped surface 24 on the front side. When the regulating lever 17 has been moved to the regulating position as shown in FIG. 1, the preventing member 21 is pushed by the cam 20 so that it is held at an engagement releasing position being spaced away from the engaging body 13.

A cover 25 is mounted on the body 1 in such a manner that it covers the preventing member 21 and the regulating lever 27.

The operation of the steering lock device thus constructed will be described. First, its assembling work will be described. In the assembling work, the key cylinder 9 is built in the body 1 in the final step. More specifically, the key cylinder 9 is built in it with the cam shaft 2 turned to a position corresponding to the "ACC" position among the operating positions.

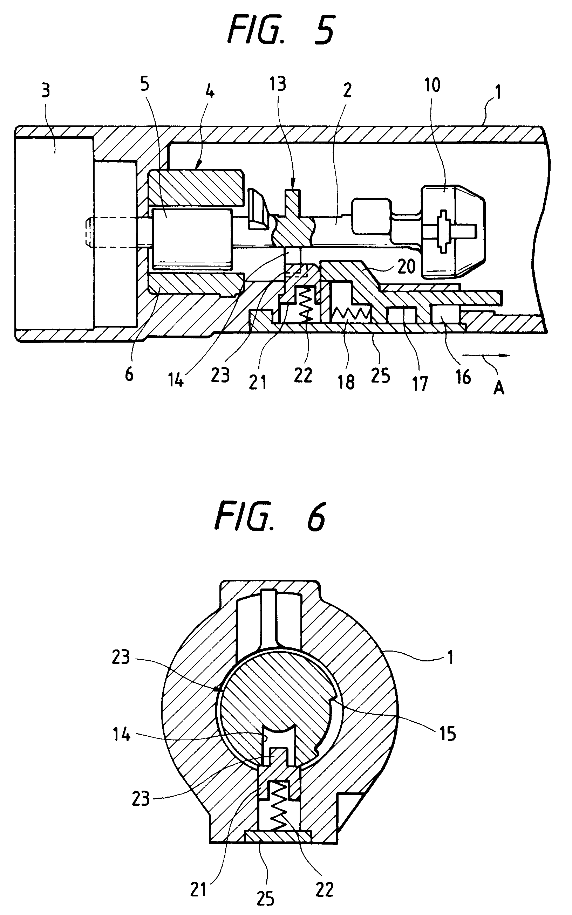

When the cam shaft 2 has been turned to the position corresponding to the "ACC" position before the key cylinder 9 is built in the body 1, as shown in FIG. 3 the regulating lever 17 is at the regulation releasing position, while as shown in FIG. 4 the auxiliary engaging groove 15 of the engaging body 13 meets the engaging protrusion 23 of the preventing member 21; that is, the engaging protrusion 23 is inserted into the auxiliary engaging groove 15. In this operation, the sloped surface 20a of the cam 20 of the regulating member 17 is confronted with the sloped surface 24 of the preventing member 21 (cf. FIG. 3).

The auxiliary engaging groove 15 is so shaped that, with the engaging protrusion 23 inserted in the auxiliary engaging groove 15, the cam shaft 22 can turn between the position corresponding to the "ACC" position to the position corresponding to "ON" position.

When, under this condition, the key cylinder 9 is built in the body 1, as shown in FIG. 1 the rear end portion of the key rotor 8 is engaged with the coupling portion 10 of the cam shaft 2, while the regulating lever 17, being pushed by the protrusion 19 of the cylinder casing 7, is moved in the direction opposite to the direction of the arrow A. As the regulating lever 17 is moved in the direction opposite to the direction of the arrow A, the sloped surface 20a of the cam 20 depresses the sloped surface 24 of the preventing member 21, so that the preventing member 21 is moved in the direction opposite to the direction of the arrow B against the elastic force of the spring 22. FIGS. 1 and 2 show the cam shaft 2 which has been turned to the position corresponding to the "LOCK" position.

When the regulating lever 17 reaches the regulating position as shown in FIG. 1, the preventing member 21 is held at the engagement releasing position by the cam 20 of the regulating lever 17. In this condition, the engaging protrusion 23 of the preventing member 21 is spaced away from the engaging body 13.

In the state shown in FIGS. 1 and 2, the rotation of the engaging body 13 is not blocked by the preventing member 21. Hence, the cam shaft 2 and accordingly the key rotor 8 of the key cylinder can be freely turned between the "LOCK" position and the "START" position with the key. Normally, use is made of the steering lock device which is set as shown in FIGS. 1 and 2.

When, under this condition (FIGS. 1 and 2), the key rotor 8 is turned with the key, the cam shaft 2 is also turned, so that the ignition switch 3 is operated, while the locking member 4 is moved by the cam protrusion 5. When, after the key rotor 8 has been turned to the "LOCK" position with the key, the latter is removed from the key rotor 8, the locking bar of the locking member 4 is engaged with the steering shaft side, so that the steering shaft and accordingly the steering wheel are locked; that is, their rotation is inhibited.

If, with the key removed from the key rotor 8 (the key rotor 8 being at "LOCK" position), the key cylinder 9 is removed from the body 1, then the regulating lever 17, being released from the protrusion 19, is moved in the direction of the arrow A by the elastic force of the spring 18, thus reaching the regulation releasing position as shown in FIG. 5.

When the regulating lever has been moved to the regulation releasing position in the above-described manner, the preventing member 21, being released from the cam 20, is moved in the direction of the arrow B, so that the engaging protrusion 23 reaches the engaging position where it is engaged with the engaging groove 14 of the engaging body 13 as shown in FIGS. 5 and 6. That is, the preventing member 21 engages with the cam shaft 2 to prevent the rotation of the latter 2. Therefore, the cam shaft 2 cannot be turned even if tried to turn it with a tool.

In this case, the preventing member 21 is engaged with the engaging body 13 in the region which is deeper than the region where the regulating lever 17 is provided. Hence, even if the regulating lever 17 is broken, the rotation of the cam shaft 2 is maintained inhibited by the preventing member 21, and therefore the rotation of the cam shaft 2 can be more positively prevented. That is, the use of the steering lock device of the invention is considerably effective in preventing car theft.

With such a steering lock device, it may be considered that, if, with the key rotor at the "ON" position (for instance during the traveling of the vehicle), the key cylinder 9 is removed from the body 1 for some reason and the cam shaft 2 is turned to the "LOCK position", then the steering shaft and accordingly the steering wheel are locked by the locking member.

However, the embodiment of the invention is free from the difficulty. With the key rotor 8 and the cam shaft 2 at the "ON" position, the auxiliary engaging groove 15 of the engaging body 13 confronts with the engaging protrusion 23 of the preventing member 21. If, under this condition, the key cylinder 9 is removed from the body 1, the engaging protrusion 23 of the preventing member 21 engages with the auxiliary engaging groove 15 of the engaging body 13 (cf. FIGS. 3 and 4. As a result, the preventing member 21 prevents the turning of the engaging body 13 and accordingly the turning of the cam shaft 2 to the "LOCK" position. Thus, the steering shaft and accordingly the steering wheel are prevented from being locked during the traveling of the vehicle.

As is apparent from the above description, if the key cylinder is removed from the body with the key rotor of the key cylinder turned to the locking position; that is, with the steering shaft locked, then the regulating lever being pushed by the key cylinder is moved from the regulating position to the regulation releasing position, and accordingly the preventing member is moved from the engagement releasing position to the engaging position to engage with the engaging groove of the engaging body. As a result of this engagement, the engaging body and accordingly the cam shaft are prevented from turning, so that the steering shaft cannot be unlocked.

Even if, in this case, the regulating lever is broken with the key cylinder removed, the rotation of the cam shaft is maintained inhibited by the preventing member, and therefore the cam shaft is more positively prevented from turning. Thus, the use of the steering lock device of the invention is considerably effective in preventing car theft.

## Claims

1. A steering lock device comprising:
a body which mounted on a vehicle;
a cam shaft having a cam protrusion on the cylindrical surface thereof, the cam shaft being rotatably provided in the body;
a key cylinder having a key rotor which is turned with a key, the key cylinder being set in the body in such a manner that the key cylinder is turned together with the cam shaft;
an engaging body having an engaging groove, the engaging body being turned together with the cam shaft;
a regulating lever provided in the body in such a manner that the regulating lever is axially movable between a regulating position and a regulation releasing position; and
a preventing member movably provided in the body and urged toward the engaging groove.

2. A steering lock device as claimed in claim 2, wherein when the key cylinder is set in the body, the regulating lever, being depressed by the key cylinder, is moved to the regulating position, and when the key cylinder is removed from the body, the regulating lever is moved to the regulation releasing position.

3. A steering lock device as claimed in claim 3, wherein the regulating position includes a primary regulating position and an auxiliary regulating position.

4. A steering lock device as claimed in claim 2, wherein when the regulating member is positioned at the regulating position, the preventing member is held at an engagement releasing position where the engagement of the preventing member with the engaging groove is released, and when the cam shaft is positioned at a predetermined position, the preventing member is moved to an engaging position where the preventing member is engaged with the engaging groove with the regulating member being moved to the regulation releasing position, to prevent the engaging body from turning.

5. A steering lock device as claimed in claim 1, further comprising: a locking member which is moved by the cam protrusion as the cam shaft turns, the locking member adapted to lock a steering shaft with the key rotor turned to the predetermined position.
